# FASCICULE DE BREVET EUROPEEN

(11) **EP 2 717 437 B1**
(45) Date de publication et mention de la délivrance du brevet: **01.08.2018**
(21) Numéro de dépôt: 13183537.3
(22) Date de dépôt: 09.09.2013
(51) Int. Cl.: H02K 5/08, H02K 15/16, G04C 3/14, F16C 33/20, F16C 35/02, H02K 7/08, G04C 3/16, G04C 3/00, H02K 37/16

(54) **Moteur électromagnétique horloger et procédé de fabrication d'un tel moteur**
Elektromagnetischer Motor für elektronisches Uhrwerk mit Analoganzeige
Electromagnetic motor for electronic clock movement with analogue display

(30) Priorité: 08.10.2012 EP 12187676
(43) Date de publication de la demande: 09.04.2014
(73) Titulaire: ETA SA Manufacture Horlogère Suisse, 2540 Grenchen (CH)
(72) Inventeur: Gaechter, Philipp, 4452 Itingen (CH); Bettelini, Marco, 2515 Prêles (CH)
(74) Mandataire: Surmely, Gérard

(56) Documents cités:
- EP-A1- 0 443 403
- EP-A1- 0 607 828
- WO-A1-2008/031795
- DE-C- 811 002
- DE-C- 848 671
- JP-A- 2006 226 771
- US-A- 4 412 144
- US-A- 4 842 425

## Description

### Domaine technique

La présente invention concerne le domaine des mouvements horlogers électroniques ayant un affichage analogique entraîné par un moteur électromagnétique. Plus particulièrement, l'invention concerne un moteur électromagnétique horloger et le procédé de fabrication d'un tel moteur, notamment le montage du rotor à aimant permanent dans une cage en matériau non magnétique.

### Arrière-plan technologique

Il est connu notamment du document EP 607 828 un moteur électromagnétique du type horloger comprenant un stator, un rotor et une cage en matériau synthétique. Cette cage comprend deux pièces distinctes formant respectivement une boîte avec deux ouvertures et un couvercle prévu pour fermer une première de ces deux ouvertures. La première ouverture est prévue pour l'introduction du rotor dans la boîte. Le couvercle comprend un palier. La seconde ouverture est une ouverture latérale prévue pour permettre à une roue d'engrener avec le pignon du rotor logé dans la cage.

Le montage du rotor dans la cage est réalisé en introduisant ce rotor dans la boîte par sa première ouverture jusqu'à ce qu'un pivot du rotor arrive au fond de la boîte, puis plus avant en veillant à aligner ce pivot avec le palier agencé dans le fond. Ensuite, le couvercle est apporté et agencé fixement de manière à fermer la première ouverture tout en veillant à maintenir le rotor dans une position centrée pour que le second pivot de ce rotor pénètre dans le palier du couvercle.

Le procédé de fabrication de l'ensemble cage-rotor décrit dans le document EP 607 828 présente plusieurs inconvénients. Premièrement, la cage doit être réalisée en deux parties avec un couvercle de fermeture. Ensuite, l'agencement du rotor dans la cage n'est pas aisé. L'introduction du premier pivot dans le palier au fond de la boîte nécessite déjà une manipulation précise du rotor lors de son introduction dans cette boîte, alors que l'introduction du second pivot dans le palier du couvercle pose un sérieux problème.

Le document WO 2008/031795 décrit un petit moteur à courant continu avec un rotor comprenant un aimant annulaire, ce rotor étant agencé dans un boîtier en deux parties dont une première partie présente un logement central pour le rotor et un pignon et deux logements d'extrémités pour respectivement deux paliers. Ces deux paliers sont introduits dans les deux logements d'extrémité simultanément au rotor dans la première partie, alors que ce rotor est déjà monté dans les deux paliers, avant que la seconde partie du boîtier soit assemblée à la première partie pour former entièrement le boîtier, lequel présente alors seulement une ouverture d'hauteur restreinte en regard du pignon pour permettre à une roue d'engrener avec ce pignon, de manière similaire au moteur divulgué dans le document précédent.

Il est connu du document JP 2006-226771 un mouvement horloger avec un moteur ayant un rotor dont les deux pivots sont introduits dans deux paliers respectifs. Le premier palier est formé dans une partie de la platine du mouvement alors que le deuxième palier est formé dans une partie d'un pont de ce mouvement. Le montage du rotor est effectué de manière classique, c'est-à-dire de manière semblable au montage d'une roue entre la platine et un pont. Ce document propose que les parties définissant les premier et deuxième paliers soient formées par des ressorts plats fonctionnant comme amortisseurs en cas d'un choc selon la direction de l'axe du rotor. On notera que le montage d'un rotor sans cage n'est pas aisé et que la seule fonction des ressorts plats est de protéger le moteur en cas de chocs.

### Résumé de l'invention

La présente invention a pour but de résoudre les problèmes susmentionnés relatif au montage d'un rotor dans une cage et de fournir un moteur électromagnétique du type horloger qui soit peu onéreux.

A cet effet, la présente invention a pour objet un mouvement horloger électronique comprenant un moteur électromagnétique et un affichage analogique entraîné par ce moteur électromagnétique, ce dernier étant formé d'un stator et d'un rotor logé dans une cage en matériau non magnétique qui est montée dans une ouverture du stator.
Le rotor comprend un aimant permanent et un pignon et présente à ses deux extrémités, selon son axe de rotation, respectivement deux pivots montés pivotant respectivement dans deux paliers agencés respectivement dans une première partie et une deuxième partie de la cage. Cette cage présente une ouverture latérale pour permettre à un mobile du mouvement horloger d'engrener avec le pignon du rotor. L'ouverture latérale de la cage présente au moins une partie ayant une largeur sensiblement égale ou supérieure au diamètre maximal du rotor et elle est agencée de manière à permettre une introduction latérale du rotor dans la cage par cette ouverture latérale. La première partie ou les première et deuxième parties de la cage est/sont élastiquement déformable(s) selon la direction de l'axe de rotation. Plus précisément, cette première partie ou ensemble ces première et deuxième parties présente(nt) une capacité de déformation élastique, selon la direction définie par les deux paliers de la cage, qui est suffisante pour permettre le montage du rotor dans la cage par l'ouverture latérale, en particulier pour permettre l'introduction des deux pivots du rotor dans les deux paliers respectifs.

Selon un mode de mise en oeuvre particulier, au moins une des première et deuxième parties formant la cage est une languette élastiquement déformable dont une extrémité est libre.

La cage du moteur électromagnétique équipant le mouvement horloger électronique selon l'invention peut être, dans un mode de réalisation préféré, formé par une seule et même pièce en matériau plastique présentant une ouverture latérale pour l'introduction du rotor. L'ensemble cage-rotor de ce moteur électromagnétique peut être aisément réalisé par un procédé de fabrication faisant également l'objet de la présente invention.

D'autres caractéristiques particulières de l'invention seront exposées ci-après dans la description détaillée d'un mode de réalisation de l'invention et du procédé de fabrication d'un mouvement horloger comprenant un ensemble cage-rotor équipant un moteur horloger selon l'invention.

### Brève description des dessins

L'invention sera décrite ci-après à l'aide des dessins annexés, donnés à titre d'exemples nullement limitatifs, dans lesquels :
- La Figure 1 est une vue de côté d'un ensemble cage-rotor pour un moteur horloger selon un mode de réalisation de l'invention ;
- La Figure 2 est une vue de dessus de l'ensemble cage-rotor de la Figure 1 ;
- La Figure 3 est coupe longitudinale partielle du moteur horloger selon la ligne III-III de la Figure2 ;
- La Figure 4 est une coupe transversale de l'ensemble cage-rotor selon la ligne IV-IV de la Figure 3 ;
- La Figure 5 montre une première variante de réalisation de la cage selon l'invention ; et
- La Figure 6 montre une deuxième variante de réalisation de la cage selon l'invention.

### Description détaillée de l'invention

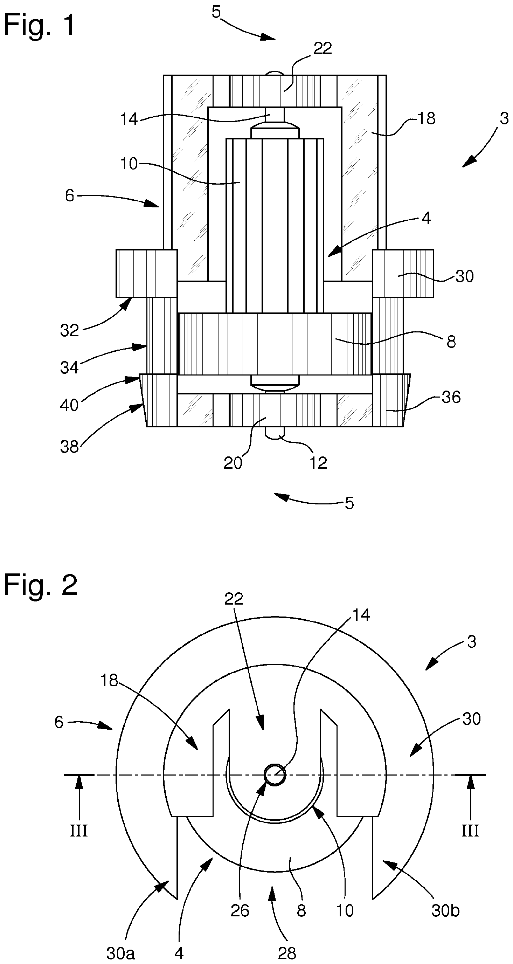

On décrira à l'aide des Figures 1 à 4 un mode de réalisation d'un moteur électromagnétique horloger 2 selon l'invention, en particulier l'ensemble cage-rotor 3 de ce moteur, ainsi que le procédé de fabrication selon l'invention d'un tel moteur.

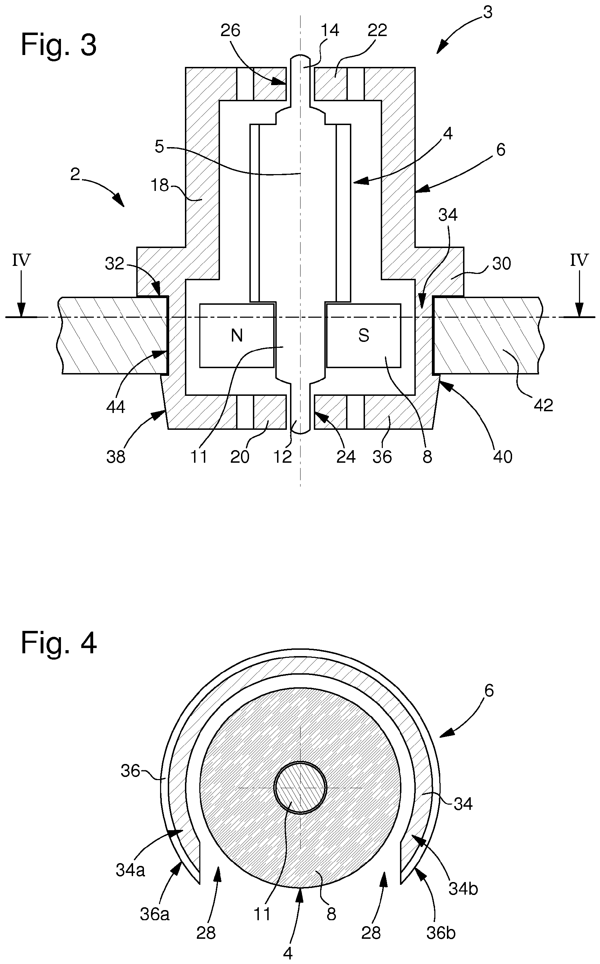

Le mouvement horloger électronique selon l'invention a un moteur électromagnétique 2 et un affichage analogique (non représenté, classique) entraîné par ce moteur électromagnétique. Le moteur électromagnétique 2 comprend un stator 42 (Figure 3) et un rotor 4 logé dans une cage 6 en matériau non magnétique montée dans une ouverture 44 du stator. Le rotor est formé par un arbre 11 qui définit un axe de rotation 5 de ce rotor. L'arbre 11 porte un aimant permanent 8 et il présente à sa périphérie, au-dessus de l'aimant permanent, un pignon 10. Aux deux extrémités de l'arbre 11 sont agencés respectivement deux pivots 12 et 14 montés pivotant dans respectivement deux paliers 24 et 26. Ces deux paliers sont agencés respectivement dans une première partie 20 et une deuxième partie 22 de la cage 6. Dans la variante représentée, les deux paliers sont définis par deux trous prévus respectivement dans les première et deuxième parties. Dans d'autres variantes, on pourra prévoir divers modes de réalisation de chaque palier, par exemple en utilisant une pierre percée qui est chassée ou collée dans un trou de la cage, avec ou sans pierre contre-pivot.

La cage 6 présente une ouverture latérale 28 entre les première et deuxième parties 20 et 22 pour permettre le montage du rotor dans la cage, comme ceci sera exposé par la suite, et pour permettre à un mobile du mouvement horloger d'engrener avec le pignon 10. A cet effet, la partie supérieure 18 de cette cage définit un cylindre sectionné selon un plan de sectionnement parallèle à l'axe de rotation 5 et sensiblement tangent à la denture du pignon 10.

La partie inférieure de la cage 6 est formée de trois parties ou sections distinctes, à savoir une partie annulaire saillante 30 définissant une surface de butée 32 en appui contre le stator 42 à la périphérie du trou statorique 44, une partie circulaire 34 dont la hauteur et le diamètre correspondent à ceux du trou statorique, et une base 36 dont la partie périphérique forme un cône tronqué dont la surface latérale 38 est définie par une génératrice de ce cône qui présente un faible angle relativement à la direction définie par les deux paliers, cette direction correspondant à celle de l'axe de rotation 5 du rotor monté dans la cage. Le cône tronqué définit à la jonction avec la partie cylindrique 34 un petit épaulement servant à la fixation de la cage au stator. L'ensemble cage-rotor 3 est destiné à être assemblé au stator 42 du moteur horloger en introduisant la cage dans une ouverture de ce stator jusqu'à une position finale où l'aimant permanent du rotor est sensiblement situé dans cette ouverture. Pour la variante de réalisation décrite ici, cet ensemble 3 est introduit à force dans le trou 44 du stator, le bord de ce trou appuyant sur la surface latérale 38 ; ce qui déforme élastiquement la base 36 jusqu'à ce que le stator ait passé l'épaulement 40 et vienne en appui contre la butée 32. La base 36 retrouve alors sa forme originale et l'ensemble cage-rotor est maintenu fixement au stator. On parlera donc d'un assemblage par encliquetage ou clipsage de l'ensemble 3 au stator 42.

On remarquera que les parties 30, 34 et 36 comprennent chacune deux parties d'extrémité 30a, 30b, respectivement 34a, 34b et 36a, 36b qui prolongent les parties respectives au-delà du plan de sectionnement de la partie supérieure 18. Cette configuration présente l'avantage de limiter au maximum l'ouverture latérale 28 dans la partie inférieure de la cage, cette ouverture étant sensiblement ajustée au diamètre de l'aimant permanent 8. Ainsi la partie circulaire 34 située dans le trou statorique présente une surface externe qui s'étend sur largement plus que 180° (voir Figure 4), de manière à assurer un centrage de la cage dans ce trou statorique. De manière générale, l'ouverture latérale 28 présente une largeur maximale au moins égale au diamètre maximal du rotor 4, en général correspondant au diamètre de l'aimant permanent. On notera que, dans une variante de réalisation, les parties 30 et 36 peuvent être interverties, la partie 30 comprenant alors le fond de cage avec la languette 20 et le plan incliné 38 étant orienté de manière à définir un épaulement qui soit en face de la surface annulaire 32 formant butée.

Les première et deuxième parties 20 et 22 sont respectivement formées par une première languette et une deuxième languette ayant chacune une extrémité libre et toutes deux sont élastiquement déformables selon la direction définie par les deux paliers 24 et 26. Ces deux languettes 20 et 22 sont prévues pour permettre le montage du rotor dans la cage en écartant ces deux languettes élastiquement déformables, le rotor étant inséré entre les deux languettes jusqu'à ce que les deux pivots du rotor soient introduits dans les deux paliers respectifs. On remarquera qu'une fois le montage effectué, ces languettes ont une fonction d'amortisseur de choc et définissent ainsi une sorte de palier antichoc.

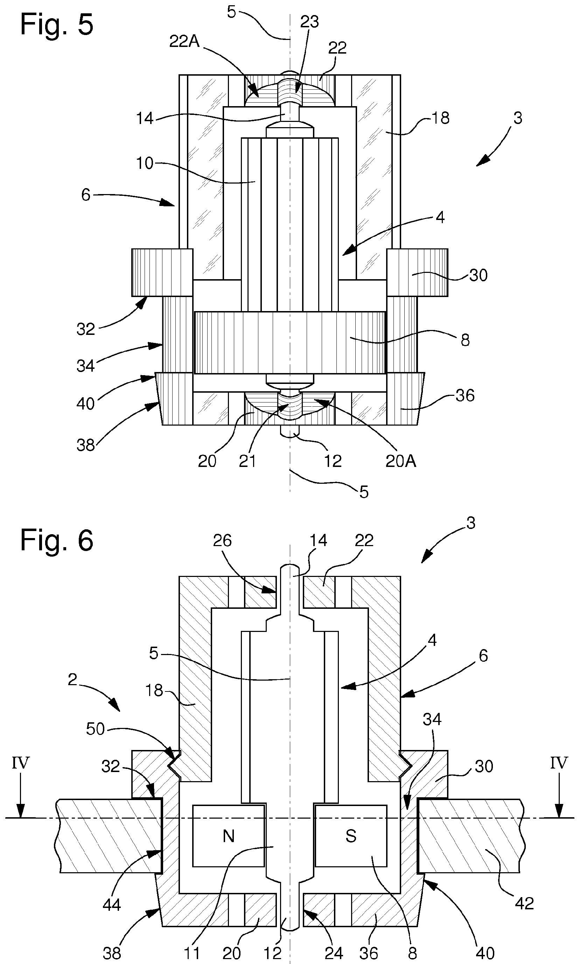

A la Figure 5 est représentée une variante de réalisation. Cette variante se distingue par le fait que les deux languettes 20 et 22 présentent chacune à son extrémité libre un plan incliné 20A, respectivement 22A relativement à l'axe de rotation 5. Dans une autre variante, seule une des deux languettes présente un tel plan incliné. De plus, la variante de la Figure 5 prévoit une rainure 21, respectivement 23 sur chacune des deux languettes entre l'ouverture latérale de la cage et les deux paliers respectifs agencés dans ces deux languettes. Chaque rainure sert de guide pour un pivot du rotor lors de l'introduction du rotor dans la cage, de manière à assurer d'aboutir directement dans le palier correspondant. On notera que, de manière générale, un plan incliné peut être prévu, dans d'autres variantes, en bordure d'au moins une partie élastiquement déformable parmi lesdites première et deuxième parties de la cage, c'est-à-dire du côté de l'ouverture latérale de cette cage, pour faciliter le montage du rotor dans la cage. On notera également que, de manière générale, une rainure peut être prévue, dans d'autres variantes, dans au moins une desdites première et deuxième parties de la cage entre le bord de cette partie définissant ladite ouverture latérale et le palier agencé dans cette partie. Dans une autre variante, la rainure est remplacée par un évidemment formant une sorte d'entonnoir dont l'embouchure est située vers l'ouverture latérale de la cage alors que le canal, à l'autre extrémité de l'entonnoir, est situé en regard du palier concerné. On remarquera finalement que diverses autres variantes sont envisageables, notamment une variante présentant une rainure ou un évidemment dans au moins une des deux parties de la cage non pourvue d'un plan incliné.

De manière générale, selon l'invention, la première partie ou les première et deuxième parties de la cage est/sont élastiquement déformable(s), cette première partie ou ensemble ces première et deuxième parties présentant une capacité de déformation élastique selon l'axe de rotation du rotor qui est suffisante pour permettre, par une déformation élastique de la première partie ou des première et deuxième parties, l'introduction du rotor dans la cage par son ouverture latérale et l'introduction de ses deux pivots dans les deux paliers respectifs de la cage. Ainsi, dans un mode de réalisation non représenté, il est prévu une seule languette élastiquement déformable dont une extrémité est libre, par exemple la languette supérieure 22. La base inférieure de la cage comprend alors un fond formé par un disque plein, sectionné ou non sectionné. Dans d'autres modes de réalisation, les parties élastiquement déformables peuvent présenter diverses configurations, par exemple un petit disque suspendu par plusieurs bras reliés à la paroi latérale de la cage ou un pont. On peut aussi envisager que les parois horizontales supérieure et inférieure présentent seulement quelques trous pour obtenir une certaine élasticité permettant une déformation élastique suffisante pour monter le rotor dans la cage par l'ouverture latérale 28, tout en ayant cependant une rigidité suffisant pour assurer un maintien du rotor dans la cage et en particulier assurer que les pivots restent dans les paliers de la cage après le montage du moteur électromagnétique dans le mouvement horloger électronique. On remarquera encore que l'élasticité requise peut aussi être obtenue en variant l'épaisseur des parois horizontales supérieure et inférieure ou par une sélection du matériau formant ces parois horizontales supérieure et inférieure et de leur épaisseur.

Dans la variante de réalisation représentée aux figures, la cage est formée entièrement par une seule et même pièce en plastique. Ceci constitue une variante préférée car la cage peut être réalisée en une seule étape par injection, sans assemblage de deux parties initialement distinctes notamment par soudage, collage, chassage ou par une fermeture à cran. Toutefois la présente invention n'exclut pas la fabrication d'une cage au moyen de plusieurs parties distinctes initiales, comme représenté à la Figure 6. Dans ce dernier cas, dans le cadre de la présente invention, au moins les première et deuxième parties comprenant respectivement les deux paliers sont assemblées dans une étape préliminaire au montage du rotor dans la cage. A la Figure 6, la partie supérieure 18 de la cage est assemblée par encliquetage ou clipsage à la partie annulaire 30. Cette dernière présente une gorge intérieure 50 dans laquelle est insérée une saillie circulaire correspondante à l'extrémité inférieure de la partie supérieure 18. Selon l'invention, pour le montage du rotor qui sera exposé ci-après, il est prévu une ouverture latérale entre les deux paliers. On peut éventuellement envisager un ajout d'une partie fermant partiellement cette ouverture après l'agencement des pivots du rotor dans les paliers correspondants de la cage, notamment pour avoir une partie circulaire non sectionnée dans le trou du stator; mais ceci augmente les coûts de fabrication.

La présente invention est remarquable par le fait que l'agencement de la cage du moteur électromagnétique permet la mise en oeuvre d'un procédé de fabrication efficace et aisé d'un moteur horloger. Ce procédé comprend les étapes successives suivantes :
A) fabrication d'une cage 6 en matériau non magnétique présentant une première partie 20 ou 22 et une deuxième partie 22, respectivement 20 dans lesquelles sont agencés deux paliers 24 et 26, ces première et deuxième parties étant formées par une seule et même pièce ou étant assemblées fixement l'une avec l'autre, la première partie ou les première et deuxième parties de la cage étant élastiquement déformable(s), cette cage étant réalisée avec une ouverture latérale 28 dont la largueur maximale est au moins égale au diamètre maximal d'un rotor destiné à être monté dans cette cage ;
B) apport du rotor comprenant deux pivots et montage de ce rotor dans la cage par son ouverture latérale en augmentant la distance entre les deux paliers de la cage par une déformation élastique de la première partie ou des première et deuxième parties de la cage, cette déformation élastique étant prévue en particulier pour introduire les deux pivots du rotor dans les deux paliers respectifs de la cage.

Dans une variante de réalisation, comme déjà mentionné précédemment, les première et deuxième parties 20 et 22 peuvent initialement être formées par deux pièces distinctes qui sont assemblées fixement (voir Figure 6) avant d'introduire le rotor dans la cage par son ouverture latérale.

Selon une première variante de mise en oeuvre du procédé de l'invention, la première partie 20 et la deuxième partie 22, définissant respectivement le premier palier et le deuxième palier, présentent toutes deux une capacité de déformation élastique significative permettant l'introduction latérale du rotor dans la cage par déformation élastique de ces première et deuxième parties. Ainsi l'augmentation de l'écartement entre les deux paliers nécessaire à l'introduction des deux pivots du rotor dans ces deux paliers est obtenue par une déformation des première et deuxième parties selon des sens opposés. Ceci permet de limiter la déformation élastique pour chacune des deux parties et donc de prévoir des parties plus rigides.

Selon une deuxième variante de mise en oeuvre du procédé de l'invention, seule la première partie définissant le premier palier ou la deuxième partie définissant le deuxième palier présente une capacité de déformation élastique significative permettant l'introduction latérale du rotor dans la cage par déformation élastique de cette première ou deuxième partie. On notera que dans une variante de réalisation dans laquelle les première et deuxième parties 20 et 22 ont une certaine capacité de déformation élastique selon l'axe défini par les deux paliers 24 et 26, le montage du rotor dans la cage peut, selon la deuxième variante de mise en oeuvre du procédé de l'invention, toutefois être effectué en ne déformant de manière significative que l'une des première et deuxième parties. Cette deuxième variante nécessite que la capacité de déformation élastique de la seule partie déformée lors du montage du rotor soit suffisante pour écarter les deux paliers de manière à pouvoir introduire les deux pivots du rotor dans ces deux paliers.

Selon une variante préférée du procédé de l'invention, les deux pivots sont introduits dans les deux paliers de manière successive.

Dans le cadre de la deuxième variante de mise en oeuvre décrite ci-avant, le montage du rotor dans la cage peut par exemple être prévu comme suit : Un premier des deux pivots est introduit dans un premier des deux paliers et ensuite, en exerçant une pression sur la première partie comprenant le premier palier, cette première partie est déformée élastiquement en s'éloignant du second palier jusqu'à ce que le second pivot puisse être amené vis-à-vis du second palier et finalement introduit dans ce dernier en relâchant ladite pression.

Dans le cadre de la première variante de mise en oeuvre décrite précédemment, le montage du rotor dans la cage peut par exemple être prévu comme suit : Un premier des deux pivots est introduit dans un premier des deux paliers et ensuite, en exerçant une pression sur la première partie comprenant le premier palier, cette première partie est déformée élastiquement en s'éloignant du second palier. Ensuite, la deuxième partie comprenant le second palier est également élastiquement déformée jusqu'à ce que le second pivot puisse être placé ou soit situé vis-à-vis du second palier et finalement introduit dans ce dernier en relâchant ladite pression.

Selon une variante de mise en ouvre particulière, au moins une des première et deuxième parties présente, du côté de ladite ouverture latérale, un plan incliné relativement audit axe de rotation. Lors de l'étape B), un pivot du rotor est apporté contre ce plan incliné et une force latérale est exercée sur le rotor pour que ce pivot exerce une pression sur le plan incliné et ainsi déforme élastiquement la partie correspondante lors du déplacement du pivot en direction du palier de cette partie correspondante, palier dans lequel il est finalement introduit. Dans une variante spécifique, les première et deuxième parties comprennent respectivement deux languettes à l'extrémité libre desquelles est prévu un plan incliné. Cette dernière variante peut être avantageuse dans le cas où les deux pivots sont sensiblement introduits simultanément dans les deux paliers respectifs. Dans ce dernier cas, le rotor est premièrement disposé relativement à la cage de manière que ses deux pivots soient en appui contre les deux plans inclinés respectifs des deux languettes. Ensuite, en exerçant une force sur le rotor qui soit perpendiculaire à son axe de rotation et en direction des deux paliers de la cage, les deux languettes sont élastiquement déformées et le rotor s'enfonce dans l'ouverture latérale 28 de la cage jusqu'à ce que les deux pivots du rotor arrivent en regard des deux paliers respectifs et finalement entrent dans ceux-ci.

Finalement, selon une autre variante de mise en ouvre particulière, une rainure ou un évidement définissant une sorte d'entonnoir est réalisé dans ladite première partie et/ou ladite deuxième partie entre ladite ouverture latérale et le palier respectif, cette rainure ou cet évidement formant un guide pour le pivot concerné entre l'ouverture latérale et le palier correspondant lors de l'étape B). Ainsi le montage du rotor dans la cage est facilité puisqu'au moins un des pivots est guidé entre l'ouverture latérale et le palier correspondant.

## Revendications

1. Mouvement horloger électronique comprenant un moteur électromagnétique (2) et un affichage analogique entraîné par ce moteur électromagnétique, ce dernier étant formé d'un stator (42) et d'un rotor (4) logé dans une cage (6) en matériau non magnétique, cette cage étant montée dans une ouverture (44) du stator, le rotor ayant un aimant permanent (8) et un pignon (10) et présentant à ses deux extrémités, selon son axe de rotation (5), respectivement deux pivots (12, 14) montés pivotant respectivement dans deux paliers (24, 26) agencés respectivement dans une première partie (20 ou 22) et une deuxième partie (respectivement 22 ou 20) de ladite cage, cette cage présentant une ouverture latérale (28) pour permettre à un mobile du mouvement horloger d'engrener avec ledit pignon ;
ce mouvement horloger étant **caractérisé en ce que** ladite ouverture latérale (28) est agencée pour permettre en outre une introduction latérale du rotor (4) dans la cage (6) par cette ouverture latérale, cette dernière (28) présentant à cet effet au moins une partie (34) ayant une largeur qui est égale ou supérieure à un diamètre maximal dudit rotor ; et **en ce que** la première partie ou les première et deuxième parties (22, 24) de la cage est/sont élastiquement déformable(s) selon la direction dudit axe de rotation (5), cette première partie ou ensemble ces première et deuxième parties présentant une capacité de déformation élastique qui est suffisante pour permettre, lors d'un montage du rotor (4) dans la cage (6) par son ouverture latérale (28), l'introduction des deux pivots (12, 14) du rotor dans les deux paliers respectifs (24, 26).

2. Mouvement horloger selon la revendication 1, **caractérisé en ce qu'**au moins une desdites première et deuxième parties (20, 22) formant ladite cage est une languette élastiquement déformable dont une extrémité, orientée du côté de ladite ouverture latérale (28), est libre.

3. Mouvement horloger selon la revendication 2, **caractérisé en ce que** ladite languette présente à son extrémité libre un plan incliné (20A; 22A) relativement audit axe de rotation (5).

4. Mouvement horloger selon la revendication 1, **caractérisé en ce que** les première et deuxième parties (20, 22) sont respectivement formées par une première languette (20) et une deuxième languette (22) toutes deux élastiquement déformables.

5. Mouvement horloger selon l'une quelconque des revendications précédentes, **caractérisé en ce qu'**au moins une desdites première et deuxième parties (20, 22) présente une rainure (21 ; 23) ou un évidement formant, lors de ladite introduction de ce rotor dans la cage, un guide pour un pivot (12 ; 14) du rotor jusqu'au palier respectif.

6. Mouvement horloger selon l'une quelconque des revendications précédentes, **caractérisé en ce que** les deux paliers sont définis par deux trous (24, 26) prévus respectivement dans les première et deuxième parties (20, 22).

7. Mouvement horloger selon l'une quelconque des revendications précédentes, **caractérisé en ce que** ladite cage (6) est formée entièrement par une seule et même pièce en matériau plastique.

8. Procédé de fabrication d'un moteur horloger comprenant un ensemble (3) formé d'une cage (6) en matériau non magnétique et d'un rotor (4) à aimant permanent (8) logé dans cette cage, cet ensemble étant destiné à être assemblé à un stator (42) du moteur horloger en introduisant ladite cage dans une ouverture (44) de ce stator jusqu'à une position finale où ledit aimant permanent est sensiblement situé dans ladite ouverture, ce procédé étant **caractérisé en ce qu'**il comprend les étapes successives suivantes :
A) fabrication de la cage (6) en matériau non magnétique présentant une première partie (20 ou 22) et une deuxième partie (respectivement 22 ou 20) dans lesquelles sont respectivement agencés deux paliers (24, 26), ces première et deuxième parties étant formées par une seule et même pièce ou étant assemblées fixement l'une avec l'autre, la première partie ou les première et deuxième parties de la cage (6) étant élastiquement déformable(s) selon la direction d'un axe de rotation (5) défini par les deux paliers, ladite cage étant réalisée avec une ouverture latérale (28) qui est agencée pour permettre une introduction latérale dudit rotor dans cette cage, cette ouverture latérale (28) ayant au moins une partie (34) présentant une largeur qui est égale ou supérieure au diamètre maximal du rotor ;
B) apport du rotor (4) comprenant deux pivots et montage de ce rotor dans la cage (6) par son ouverture latérale (28) en augmentant la distance entre les deux paliers (24, 26) de la cage par une déformation élastique de ladite première partie ou des première et deuxième parties de la cage (6), cette déformation élastique étant prévue pour introduire les deux pivots (12, 14) du rotor dans les deux paliers respectifs (24, 26) de ladite cage.

9. Procédé selon la revendication 8, **caractérisé en ce que** les deux pivots (12, 14) sont introduits dans les deux paliers (24, 26) de manière successive.

10. Procédé selon la revendication 9, **caractérisé en ce qu'**un premier des deux pivots (12, 14) est introduit dans un premier des deux paliers (24, 26), et qu'ensuite, en exerçant une pression sur ladite première partie comprenant le premier palier, cette première partie est déformée élastiquement en s'éloignant du second palier jusqu'à ce que le second pivot soit amené vis-à-vis de ce second palier et introduit ensuite dans celui-ci en relâchant ladite pression.

11. Procédé selon la revendication 9, **caractérisé en ce qu'**un premier des deux pivots (12, 14) est introduit dans un premier des deux paliers (24, 26), et qu'ensuite, en exerçant une pression sur ladite première partie comprenant le premier palier, cette première partie est déformée élastiquement en s'éloignant du second palier, et **en ce que** ladite deuxième partie comprenant le second palier est également élastiquement déformée jusqu'à ce que le second pivot soit amené vis-à-vis de ce second palier et introduit ensuite dans celui-ci en relâchant ladite pression.

12. Procédé selon l'une quelconque des revendications 8 à 11, **caractérisé en ce qu'**au moins une des première et deuxième parties présente, du côté de ladite ouverture latérale, un plan incliné (20A; 22A) relativement audit axe de rotation, et **en ce que**, lors de l'étape B), un pivot (12, respectivement 14) du rotor est apporté contre ce plan incliné et une force latérale est exercée sur le rotor pour que ce pivot exerce une pression sur le plan incliné et ainsi déforme élastiquement la partie correspondante lors du déplacement du pivot en direction du palier de cette partie correspondante, palier dans lequel il est finalement introduit.

13. Procédé selon l'une quelconque des revendications 8 à 12, **caractérisé en ce qu'**au moins ladite première partie comprend une languette (20 ou 22) ou un pont élastiquement déformable.

14. Procédé selon la revendication 13, **caractérisé en ce que** ladite languette élastiquement déformable (20 ou 22) présente une extrémité libre du côté de ladite ouverture latérale (28).

15. Procédé selon l'une quelconque des revendications 8 à 14, **caractérisé en ce qu'**une rainure (21; 23) ou un évidement définissant une sorte d'entonnoir est réalisé dans la première partie et/ou la deuxième partie entre ladite ouverture latérale et le palier correspondant, cette rainure ou cet évidement formant, lors de l'étape B), un guide pour le pivot concerné (12, respectivement 14) entre l'ouverture latérale (28) et le palier (24, respectivement 26) correspondant.

## Patentansprüche

1. Elektronisches Uhrwerk, umfassend einen elektromagnetischen Motor (2) und eine analoge Anzeige, die durch diesen elektromagnetischen Motor angetrieben wird, wobei dieser Letztere gebildet ist aus einem Stator (42) und aus einem Rotor (4), der in einem Gehäuse (6) aus einem nicht magnetischen Material angeordnet ist, wobei dieses Gehäuse in einer Öffnung (44) des Stators montiert ist, wobei der Rotor einen Permanentmagneten (8) und ein Ritzel (10) besitzt und an seinen beiden Enden längs seiner Drehachse (5) zwei Drehzapfen (12, 14) aufweist, die in zwei entsprechenden Lagern (24, 26) drehbar montiert sind, die in einem ersten Teil (20 oder 22) und entsprechend in einem zweiten Teil (22 oder 20) des Gehäuses angeordnet sind, wobei dieses Gehäuse eine seitliche Öffnung (28) aufweist, um einem Drehteil des Uhrwerks zu ermöglichen, mit dem Ritzel in Eingriff zu gelangen;
wobei das Uhrwerk **dadurch gekennzeichnet ist, dass** die seitliche Öffnung (28) dafür ausgelegt ist, ferner ein seitliches Einführen des Rotors (4) in das Gehäuse (6) durch diese seitliche Öffnung zu ermöglichen, wobei diese Letztere (28) hierzu mindestens einen Abschnitt (34) aufweist, der eine Breite aufweist, die gleich oder größer als ein maximaler Durchmesser des Rotors ist; und dass der erste Teil oder der erste und der zweite Teil (22, 24) des Gehäuses in Richtung der Drehachse (5) elastisch verformbar sind, wobei dieser erste Teil oder die Anordnung des ersten und des zweiten Teils eine elastische Verformbarkeit aufweisen, die ausreicht, um bei der Montage des Rotors (4) in dem Gehäuse (6) durch seine seitliche Öffnung (28) das Einführen der zwei Drehzapfen (12, 14) des Rotors in die beiden jeweiligen Lager (24, 26) zu ermöglichen.

2. Uhrwerk nach Anspruch 1, **dadurch gekennzeichnet, dass** mindestens einer des ersten und des zweiten Teils (20, 22), die das Gehäuse bilden, eine elastisch verformbare Zunge ist, deren zur Seite der seitlichen Öffnung (28) ausgerichtetes Ende frei ist.

3. Uhrwerk nach Anspruch 2, **dadurch gekennzeichnet, dass** die Zunge an ihrem freien Ende eine in Bezug auf die Drehachse (5) geneigte Ebene (20A; 22A) aufweist.

4. Uhrwerk nach Anspruch 1, **dadurch gekennzeichnet, dass** der erste und der zweite Teil (20, 22) jeweils aus einer ersten Zunge (20) und einer zweiten Zunge (22), die beide elastisch verformbar sind, gebildet sind.

5. Uhrwerk nach einem der vorhergehenden Ansprüche, **dadurch gekennzeichnet, dass** der erste und/oder der zweite Teil (20, 22) eine Rille (21; 23) oder eine Aussparung aufweisen, die bei der Einführung dieses Rotors in das Gehäuse eine Führung für einen Drehzapfen (12; 14) des Rotors bis zu dem jeweiligen Lager bilden.

6. Uhrwerk nach einem der vorhergehenden Ansprüche, **dadurch gekennzeichnet, dass** die beiden Lager durch zwei Löcher (24, 26) definiert sind, die jeweils entsprechend in dem ersten und dem zweiten Teil (20, 22) vorgesehen sind.

7. Uhrwerk nach einem der vorhergehenden Ansprüche, **dadurch gekennzeichnet, dass** das Gehäuse (6) vollständig aus ein und demselben Teil aus Kunststoff gebildet ist.

8. Verfahren zum Herstellen eines Uhrenmotors, umfassend eine Anordnung (3), die gebildet ist aus einem Gehäuse (6) aus nichtmagnetischem Material und aus einem Rotor (4) mit Permanentmagneten (8), der in diesem Gehäuse angeordnet ist, wobei diese Anordnung dazu bestimmt ist, mit einem Stator (42) des Uhrenmotors zusammengefügt zu werden, indem das Gehäuse in eine Öffnung (44) dieses Stators bis in eine Endposition, in der sich der Permanentmagnet im Wesentlichen in der Öffnung befindet, eingeführt wird, wobei dieses Verfahren **dadurch gekennzeichnet ist, dass** es die folgenden aufeinander folgenden Schritte umfasst:
A) Herstellen des Gehäuses (6) aus nichtmagnetischem Material, der einen ersten Teil (20 oder 22) und einen zweiten Teil (entsprechend 22 oder 20) aufweist, in denen zwei entsprechende Lager (24, 26) angeordnet sind, wobei dieser erste und dieser zweite Teil durch ein und dasselbe Teil gebildet sind, die fest miteinander zusammengefügt sind, wobei der erste Teil oder der erste und der zweite Teil des Gehäuses (6) in Richtung einer Drehachse (5), die durch die beiden Lager definiert ist, elastisch verformbar sind, wobei das Gehäuse mit einer seitlichen Öffnung (28) ausgebildet ist, die dafür ausgelegt ist, eine seitliche Einführung des Rotors in dieses Gehäuse zu ermöglichen, wobei diese seitliche Öffnung (28) mindestens einen Abschnitt (34) besitzt, der eine Breite aufweist, die gleich oder größer als der maximale Durchmesser des Rotors ist;
B) Bereitstellen des Rotors (4), der zwei Drehzapfen aufweist, urld Montieren dieses Rotors in dem Gehäuse (6) durch dessen seitliche Öffnung (28) durch Erhöhen des Abstands zwischen den beiden Lagern (24, 26) des Gehäuses durch eine elastische Verformung des ersten Teils oder des ersten und des zweiten Teils des Gehäuses (6), wobei diese elastische Verformung dazu vorgesehen ist, die beiden Drehzapfen (12, 14) des Rotors in die beiden jeweiligen Lager (24, 26) des Gehäuses einzuführen.

9. Verfahren nach Anspruch 8, **dadurch gekennzeichnet, dass** die beiden Drehzapfen (12, 14) nacheinander in die beiden Lager (24, 26) eingeführt werden.

10. Verfahren nach Anspruch 9, **dadurch gekennzeichnet, dass** ein erster der beiden Drehzapfen (12, 14) in ein erstes der beiden Lager (24, 26) eingeführt wird und dass anschließend durch Ausüben eines Drucks auf den ersten Teil, der das erste Lager enthält, dieser erste Teil elastisch verformt wird und sich dabei von dem zweiten Lager entfernt, bis der zweite Drehzapfen an eine Position gegenüber diesem zweiten Lager gebracht wird und dann unter Verringerung des Drucks in dieses eingeführt wird.

11. Verfahren nach Anspruch 9, **dadurch gekennzeichnet, dass** ein erster der beiden Drehzapfen (12, 14) in ein erstes der beiden Lager (24, 26) eingeführt wird und dass anschließend durch Ausüben eines Drucks auf den ersten Teil, der das erste Lager enthält, dieser erste Teil elastisch verformt wird und sich dabei von dem zweiten Lager entfernt, und dass der zweite Teil, der das zweite Lager aufweist, ebenfalls elastisch verformt wird, bis der zweite Drehzapfen an eine Position gegenüber diesem zweiten Lager gebracht worden ist und anschließend unter Verringerung des Drucks in dieses eingeführt wird.

12. Verfahren nach einem der Ansprüche 8 bis 11, **dadurch gekennzeichnet, dass** der erste und/oder der zweite Teil auf Seiten der seitlichen Öffnung eine in Bezug auf die Drehachse geneigte Ebene (20A; 22A) aufweist und dass im Schritt B) ein Drehzapfen (12 oder entsprechend 14) des Rotors gegen diese geneigte Ebene geführt wird und dass eine seitliche Kraft auf den Rotor ausgeübt wird, damit dieser Drehzapfen einen Druck auf die geneigte Ebene ausübt und somit den entsprechenden Teil elastisch verformt, wenn der Drehzapfen in Richtung des Lagers dieses entsprechenden Teils verlagert wird, wobei er schließlich in dieses Lager eingeführt wird.

13. Verfahren nach einem der Ansprüche 8 bis 12, **dadurch gekennzeichnet, dass** mindestens der erste Teil eine Zunge (20 oder 22) oder eine elastisch verformbare Brücke aufweist.

14. Verfahren nach Anspruch 13, **dadurch gekennzeichnet, dass** die elastisch verformbare Zunge (20 oder 22) auf Seiten der seitlichen Öffnung (28) ein freies Ende aufweist.

15. Verfahren nach einem der Ansprüche 8 bis 14, **dadurch gekennzeichnet, dass** eine Nut (21; 23) oder eine Aussparung, die eine Art Trichter definiert, in dem ersten Teil und/oder in dem zweiten Teil zwischen der seitlichen Öffnung und dem entsprechenden Lager ausgebildet ist, wobei diese Nut oder diese Aussparung im Schritt B) eine Führung für den betreffenden Drehzapfen (12 oder entsprechend 14) zwischen der seitlichen Öffnung (28) und dem entsprechenden Lager (24 oder entsprechend 26) bildet.

## Claims

1. Electronic timepiece movement having an electromagnetic motor (2) and an analogue display driven by said electromagnetic motor, said motor being formed of a stator (42) and of a rotor (4) housed in a frame (6) made of non-magnetic material mounted in an aperture (44) in the stator, the rotor including a permanent magnet (8) and a pinion (10) and having at both ends, along the axis of rotation (5) thereof, respectively two pivots (12, 14) which are respectively pivotally mounted in two bearings (24, 26) respectively arranged in a first part (20 or 22) and a second part (respectively 22 or 20) of said frame, said frame having a lateral aperture (28) in order to allow a timepiece wheel to mesh with said pinion;
said timepiece movement being **characterized in that** said lateral aperture (28) is arranged to further allow for the lateral insertion of the rotor (4) in the frame (6) by this lateral aperture, the latter (28) having for this purpose at least one portion (34) having a width at least equal to the maximum diameter of said rotor; and **in that** the first part or the first and second parts (22, 24) of the frame is/are elastically deformable along the direction of said axis of rotation (5), said first part or said first and second parts together having sufficient elastic deformation capacity to allow, during an assembly of the rotor (4) in the frame (6) by its lateral aperture (28), the insertion of the two rotor pivots (12, 14) into the two respective bearings (24, 26).

2. Timepiece movement according to claim 1, **characterized in that** at least one of said first and second parts (20, 22) forming said frame is an elastically deformable tongue having one free end, on the side of said lateral aperture (28).

3. Timepiece movement according to claim 2, **characterized in that** at the free end thereof said tongue has an inclined plane (20A; 22A) relative to said axis of rotation (5).

4. Timepiece movement according to claim 1, **characterized in that** the first and second parts (20, 22) are respectively formed by a first tongue (20) and a second tongue (22) both of which are elastically deformable.

5. Timepiece movement according to any of the preceding claims, **characterized in that** at least one of said first and second parts (20, 22) has a groove (21; 23) or a recess forming a guide for guiding a rotor pivot (12; 14) to the respective bearing when said rotor is inserted into the frame.

6. Timepiece movement according to any of the preceding claims, **characterized in that** the two bearings are defined by two holes (24, 26) respectively provided in the first and second parts (20, 22).

7. Timepiece movement according to any of the preceding claims, **characterized in that** said frame (6) is entirely formed by the same single piece made of plastic material.

8. Method of manufacturing a timepiece motor including an assembly (3) formed of a frame (6) made of non-magnetic material and of a rotor (4) with a permanent magnet (8) housed in said frame, said assembly being intended to be assembled to a stator (42) of the timepiece motor by inserting said frame into an aperture (44) in said stator into a final position where said permanent magnet is substantially located inside said aperture, said method being **characterized in that** it includes the following successive steps:
A) manufacturing a frame (6) made of non-magnetic material having a first part (20 or 22) and a second part (respectively 22 or 20), in which there are respectively arranged two bearings (24, 26), said first and second parts being formed by the same single piece or being fixedly assembled to each other, the first part or the first and second parts of the frame (6) being elastically deformable along the direction of an axis of rotation (5) defined by the two bearings, said frame being made with a lateral aperture (28) which is arranged to allow for the lateral insertion of said rotor in this frame, this lateral aperture (28) having at least one portion (34) having a width which is greater than or equal to the maximum diameter of said rotor;
B) taking the rotor (4) comprising two pivots and assembling the rotor in the frame (6) through the lateral aperture (28) therein by increasing the distance between the two bearings (24, 26) of the frame via the elastic deformation of said first part or of the first and second parts of the frame (6), said elastic deformation being arranged to allow the insertion of the two rotor pivots (12, 14) into the two respective bearings (24, 26) of the frame.

9. Method according to claim 8, **characterized in that** the two pivots (12, 14) are inserted into the two bearings (24, 26) in succession.

10. Method according to claim 9, **characterized in that** the first of the two pivots (12, 14) is inserted into the first of the two bearings (24, 26), and then, by exerting pressure on the first part including the first bearing, the first part is elastically deformed and moved away from the second bearing until the second pivot can be placed opposite the second bearing and then inserted therein by releasing said pressure.

11. Method according to claim 9, **characterized in that** the first of the two pivots (12, 14) is inserted into the first of the two bearings (24, 26), and then, by exerting pressure on the first part including the first bearing, said first part is elastically deformed and moved away from the second bearing, and **in that** the second part including the second bearing is also elastically deformed until the second pivot can be placed or is located opposite said second bearing and then inserted therein by releasing said pressure.

12. Method according to any of claims 8 to 11, **characterized in that** at least one of the first and second parts has, on the side of said lateral aperture, an inclined plane (20A; 22A) relative to said axis of rotation, and **in that**, in step B), a rotor pivot (12, respectively 14) is placed against said inclined plane and a lateral force is exerted on the rotor so that the pivot exerts pressure on the inclined plane and thus elastically deforms the corresponding part when the pivot is moved towards the bearing of said corresponding part, and is finally inserted into said bearing.

13. Method according to any of claims 8 to 12, **characterized in that** at least said first part includes an elastically deformable bridge or tongue (20 or 22).

14. Method according to claim 13, **characterized in that** said elastically deformable tongue (20 or 22) has a free end on the side of said lateral aperture.

15. Method according to any of claims 8 to 14, **characterized in that** a groove (21; 23) or a recess defining a type of funnel is made in the first part and/or the second part between said lateral aperture and the corresponding bearing, said groove or said recess forming, in step B), a guide for the pivot concerned (12, respectively 14) between the lateral aperture (28) and the corresponding bearing (24, respectively 26).
